# EUROPEAN PATENT SPECIFICATION

(11) **EP 4 202 843 B1**
(45) Date of publication and mention of the grant of the patent: **14.10.2026**
(21) Application number: 21306899.2
(22) Date of filing: 22.12.2021
(51) Int. Cl.: G06T 15/20, G06T 19/20

(54) **METHOD AND DEVICE FOR ENHANCING THE DISPLAY OF FEATURES OF INTEREST IN A 3D IMAGE OF AN ANATOMICAL REGION OF A PATIENT**
VERFAHREN UND VORRICHTUNG ZUR VERBESSERUNG DER ANZEIGE VON INTERESSIERENDEN MERKMALEN IN EINEM 3D-BILD EINES ANATOMISCHEN BEREICHS EINES PATIENTEN
PROCÉDÉ ET DISPOSITIF PERMETTANT D'AMÉLIORER L'AFFICHAGE DE CARACTÉRISTIQUES D'INTÉRÊT DANS UNE IMAGE 3D D'UNE RÉGION ANATOMIQUE D'UN PATIENT

(43) Date of publication of application: 28.06.2023
(73) Proprietor: MinMaxMedical, 38400 Saint-Martin-d'Hères (FR)
(72) Inventor: CLERE, Arnaud, 38400 SAINT MARTIN D'HERES (FR); DELMON, Vivien, 38400 SAINT MARTIN D'HERES (FR); BLEIN, YOANN, 38400 SAINT MARTIN D'HERES (FR); MIRABEL, Clément, 38400 SAINT MARTIN D'HERES (FR)
(74) Representative: Regimbeau

(56) References cited:
- EP-A1- 3 889 888
- NETHERTON TUCKER J. ET AL: "Evaluation of a multiview architecture for automatic vertebral labeling of palliative radiotherapy simulation CT images", vol. 47, no. 11, 29 June 2020 (2020-06-29), US, pages 5592 - 5608, XP055927365, ISSN: 0094-2405, Retrieved from the Internet <URL:https://aapm.onlinelibrary.wiley.com/doi/full/10.1002/mp.14415> DOI: 10.1002/mp.14415
- PERKLAB RESEARCH: "New "Surface cut" and "Mask volume" tools for 3D Slicer segment editor", 17 July 2017 (2017-07-17), XP055927011, Retrieved from the Internet <URL:https://www.youtube.com/watch?v=xZwyW6SaoM4>

## Description

### FIELD OF THE INVENTION

The invention concerns a method and a system for allowing appropriate display for assisting a diagnostic, or a manual or a robot assisted intervention, or the planning of such intervention, in a region of interest of the patient. In particular, the invention concerns a method and a system for enhancing the display of features of interest in a 3D image of an anatomical region of a patient. The invention can also be used during a navigation of a medical instrument.

### BACKGROUND OF THE INVENTION

When examining a medical image, a practitioner may have to precisely and unambiguously identify an anatomical feature, for example a patient's vertebra pedicle.

To do so, the practitioner must be able to visualize the region of interest, the anatomical feature by means of 2D representation(s) of the region of interest obtained by a medical imaging device.

Such visualization can be advantageous when a diagnostic in a region of interest must be performed: for planning an intervention in this region of interest, or for the intervention as such in this region for interest.

However, relevant anatomical features are often hidden by other irrelevant information located in front of or behind the region of interest, or by voxels which intensities are out of the intensity range in the region of interest. NETHERTON TUCKER J. ET AL: "Evaluation of a multiview architecture for automatic vertebral labeling of palliative radiotherapy simulation CT images", 29 July 2020 (Medical Physics: Volume 47, Issue 11 November 2020 Pages 5592-5608) discloses an automatic pipeline that segments the spinal canal in 3D CT, crops a 3D volume of interest around it, generates sagittal and coronal intensity projection pairs.

### SUMMARY OF THE INVENTION

The present invention is defined by the appended independent claims. The invention allows the practitioner to eliminate irrelevant anatomical information displayed on a projection of a region of interest.

To this end, the invention, according to a first aspect, concerns a computer implemented method for enhancing the display of features of interest in a 3D image of an anatomical region of a patient, the method comprising the steps of claim 1.

The invention according to the first aspect, may be completed by one or several of the features, alone or in combination as follows:
- the method comprises a step of determining from the third 2D image a second 3D region of interest; and a step of projecting said second 3D region of interest according to the first point of view for obtaining a fourth 2D image;
- the step of defining the 2D region comprises a step of defining a central line and a first line at a first distance of the central line and a step of defining a second line at a second distance of the central line, said 2D region being delimited by the first line and the second line on both sides of the central line;
- the first distance is different or equal to the second distance;
- the central line is defined by a point and a direction, the central line being computed from the point and the direction, wherein the point and the direction are determined manually or automatically;
- the step of defining the 2D region comprises a step of defining a circle on the first or second 2D image, a central line being defined relative to the center of the circle as defined, and preferably crosses the center;
- the step of defining a 2D region on the first 2D image is implemented automatically or manually;
- the method comprises a step of filtering the first and/or second 3D region of interest so as to keep the pixels or voxels having levels defined with respect to a predetermined threshold, in the first or second 3D region of interest;
- the method comprises a step of filtering the first and/or second 3D region of interest so as to keep the pixels or voxels having levels higher than the maximum value of a percentage of the pixels or voxels of lower level in the first or second 3D region of interest;
- the method comprises a step of filtering the first and/or second region of interest so as to keep the pixels or voxels having levels lower than the maximum value of a percentage of the pixels or voxels of higher level in the first or second 3D region of interest;
- the 3D image is selected among a plurality of 3D images; the selection being implemented automatically or manually;
- the method comprises a step of displaying the 2D images;
- the first point of view is orthogonal to the second point of view.

According to a second aspect, the invention concerns medical imaging system comprising a processor configured for implementing the computer implemented method according to the first aspect of the invention.

### BRIEF DESCRIPTION OF THE DRAWINGS

Other features and advantages of the invention will appear in the following description. Embodiments of the invention will be described with reference to the drawings, in which
- figure 1 illustrates a medical imaging system and a display system according to an embodiment of the invention;
- figure 2 illustrates steps of a method according to the invention;
- figures 3a, 3b illustrate respectively a lateral view and a front view of an anatomical region of a patient;
- figures 4a, 4b, 4c and 4d illustrate several embodiments for the definition of a region of interest in the method of the invention;
- figures 5a and 5b illustrate respectively the lateral view of figure 3a in which a region of interest is defined and the front view of figure 3b in which irrelevant information is suppressed;
- figures 6a illustrates the view of figure 5b in which a region of interest is defined, and figure 6b illustrates the corresponding lateral view in which irrelevant information is suppressed.

### DETAILED DESCRIPTION OF THE INVENTION

### Medical imaging system

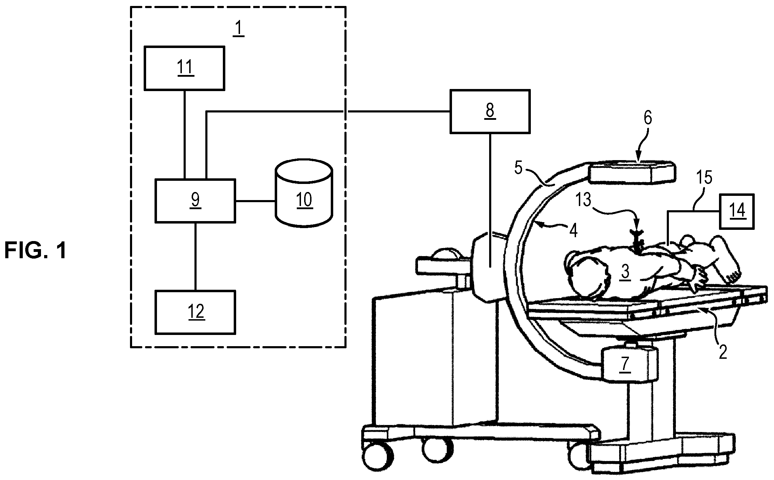

**Figure** 1 illustrates a medical imaging system 1 comprising an operating table 2 on which a patient 3 may be disposed. In particular, the patient 3 may lie on this table 2 for surgical spine procedure for instance. The medical imaging system 1 may also be used in various types of medical interventions, including surgery and interventional radiology.

The medical imaging system 1 may also be linked or integrated with a device 4 for acquiring medical images comprising a detector 6 and an X-ray source 7. The X-ray source 7 and the detector 6 are, in particular, mounted facing each other. This device 4 may be a cone beam computed tomography (CBCT) or a computed tomography (CT) imaging system both well known in the art. The detector 6 and the X-ray source 7 may be arranged at ends of a C-arm 5 which is preferably rotatably mounted around the operating table 2 for acquiring images according to different positions of the C-arm relative to the patient 3.

The device 4 comprises a control unit 8 (such as a computer) for controlling the device, reconstructing 3D images from acquired 2D images, and sending them to the medical imaging system 1. To this end, the control unit 8 is connected to the medical imaging system 1 by means of any suitable communication link.

The medical imaging system 1 comprises a storage unit 10 configured for storing at least the acquired and reconstructed images, and a processing unit 9 for processing images. Furthermore, the medical imaging system 1 comprises one or several display(s) 11 for the display of images or other parameters that the practitioner needs.

By display we mean any suitable device for displaying information to the practitioner: means suitable for augmented reality, virtual reality, computer screen, means for projecting images, etc. In any case, the invention cannot be limited to a particular display.

The medical imaging system 1 permits to explore a region of interest of a patient in which a diagnostic, planning, or intervention must be performed.

The medical imaging system 1 can include elements for the navigation of an instrument. These elements can be used, for facilitating the gesture of the practitioner or control the gesture of a robot when he manipulates an instrument inserted into the patient. To do so, a tracking system 12 can be connected to the system 1, thus permitting to track the instrument relative to the patient and the images relative to the patient. As known, the tracking system 12 can be an optical tracking system, an electromagnetic tracking system, an ultrasonic tracking system, an inertial tracking system, a mechanical tracking system, or any combination of those. The tracking system locates the position of a tracker 14 attached to an instrument 15 with respect to a reference tracker 13 attached to a patient anatomical structure.

The instrument is, preferably, a linear instrument such as a trocar, a needle, a drill or equivalent. Alternatively, the instrument may be a planar instrument with a principal axis, such as a saw with the median axis of the cutting plane. The instrument equipped with a tracker can be navigated free-hand or inserted in a guide held by a robot or actively moved by a robot.

### Method

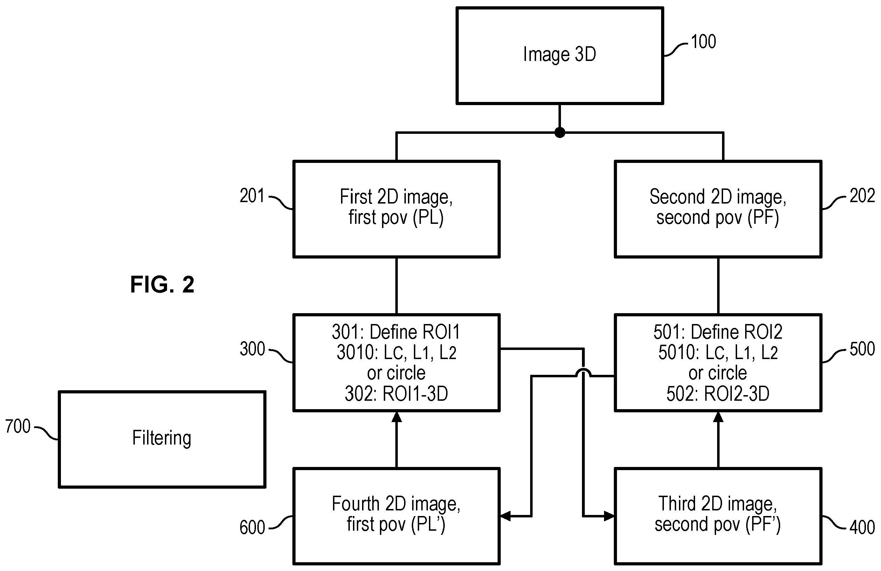

In the following we describe a method for processing images for enhancing the display of features of interest in a 3D image of an anatomical region of the patient in relation to figure 2.

The method comprises a step of obtaining a 3D image of a region of an anatomical region of the patient (step 100). As known, this 3D image of this region can be obtained from 2D images (or projections or 2D projections) acquired according from different positions of the C-arm or CT scanning system in the referential of the medical imaging system. In particular, the 3D image is obtained by a tomography reconstruction process of the region.

The 3D image can be obtained before the surgery. Advantageously, a calibration between the 3D image and the patient is also performed by determining a geometric relationship between the imaging system 1 and the patient.

. The 3D image can also be acquired during the surgery. In a preferred embodiment, an intraoperative CBCT made of a motorized C-arm is used to generate a 3D image from a plurality of X-ray 2D projections.

The obtention of the 3D image is well known by the man skilled in the art and will not be described further.

The 3D image is then projected according to a first point of view and according to a second point of view (step 201, step 202) for obtaining a first 2D image and a second 2D image of the anatomical region.

The first and second points of view depend on the most appropriate point of view for the medical intervention. This point of view can be defined manually by the practitioner or automatically depending on anatomical features to be visualized so as to, e.g., maximize the visibility of an anatomical structure (e.g., spine) or follow a targeted axis or plane.

Advantageously, the first and second points of view are different, the first point of view being preferably transverse to the second point of view. For instance, the first point of view is a lateral direction while the second point of view is a front direction. More generally, the first point of view can be orthogonal to the second point of view.

These 2D images are defined as the projections of the voxels of the 3D image from these two points of view and thus illustrate the anatomical region in 2D according to each of these points of view onto a 2D plane.

These 2D images or projections thus project several 3D voxels onto a single 2D pixel. In particular, these 2D images provide an overall view of anatomical features in an anatomical region of the patient according to different points of view.

These 2D images can be obtained from the patient itself or by simulation as described here below.

According to an embodiment, a 2D image is a radiographic image whose pixels quantify a level of X-ray absorption by the 3D anatomy of the patient according to an X-ray source and direction to the X-ray detector found e.g., in CBCT imaging systems.

According to another embodiment, a 2D image can be computed from a 3D image to simulate radiographs and are well known as Digitally-Reconstructed Radiographs (DRR) as described in document US7653226. Such DRR avoid having to expose the patient to repeated doses of radiation to generate a specific projection needed. In the case of CT scanner which use 1D X-ray detectors, it may be the only physical solution to present radiographic images to practitioners.

According to another embodiment, a 2D image can be a well-known Maximum Intensity Projection (MIP) computed by retaining for each 2D pixel the maximum intensity value of all the 3D voxels projected onto it.

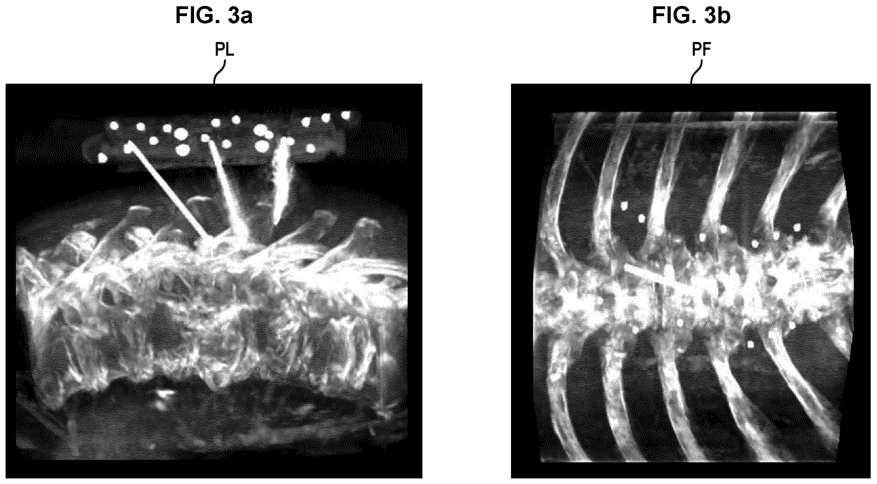

Figure 3a illustrates a 2D image of an anatomical region viewed according to a lateral point of view and figure 3b illustrates a 2D image of the same anatomical region viewed in a front point of view. In particular, figures 3a and 3b display thoracic vertebrae and ribs, along with radio-opaque fiducials.

When a practitioner needs to intervene in the structure of the anatomical region viewed on figure 3a, the practitioner needs to see the structure according to another point of view like the one on figure 3b.

To this end, the first 2D image is used for determining a first 3D region of interest to be viewed (step 300).

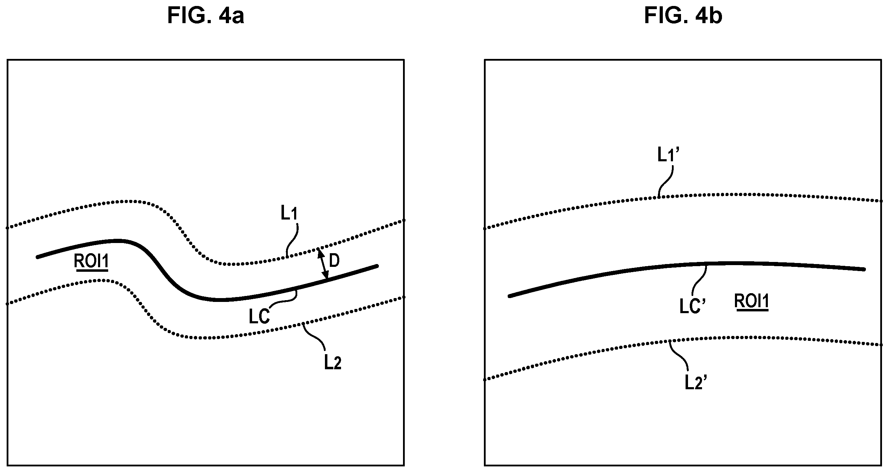

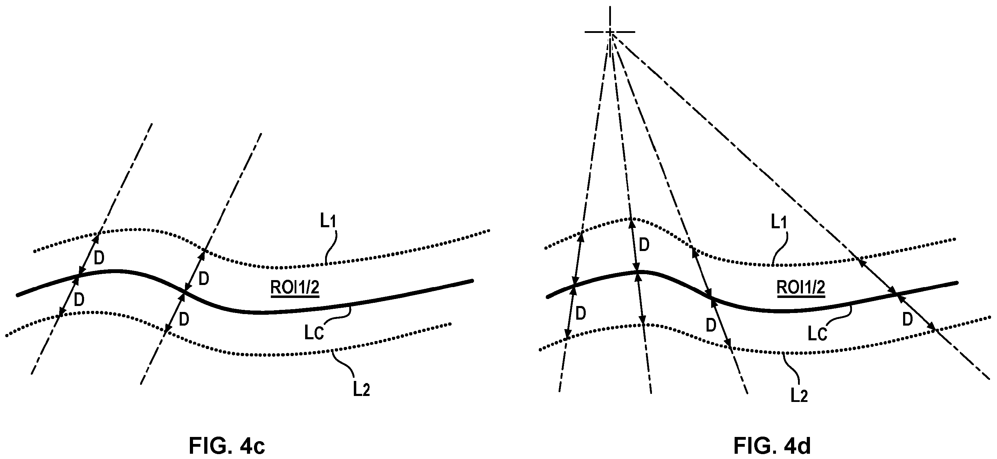

Figures 4a,4b, 4c and 4d illustrate several embodiments for defining the region of interest around a central line firstly defined on that region.

As illustrated on figures 4a and 4b, this first 3D region of interest is preferably obtained by defining a first 2D region of interest ROI1 on the first 2D image (step 301) and by obtaining the corresponding first 3D region of interest ROI1-3D in the 3D image so that the first 2D region of interest ROI1 corresponds to the projection of the first 3D region of interest according to the first point of view.

As illustrated on figure 4a, the first 2D region of interest ROI1 is delimited by a first line L₁ and a second line L₂ different from the first line L₁, the first line L₁ and the second line L₂ being at a distance D on both sides of a central line L_{C}. Here, the first line L1 and the second line L₂ are at equal distance from the central line Lc. However, as illustrated in figures 4c and 4d it is not necessarily the case. Indeed, the distances between the first or second line and the central line can be different. On figure 4c, the distances D on both sides of the central line are equal. Such definition of the region of interest corresponds to the visualization of the region from the infinite. On figure 4d, the distances D on both sides of the central line Lc are different. Such definition corresponds to the visualization of the region from a specific point of view.

The definition of the first 2D region can be made manually by the user examining the anatomical region of the patient or automatically. In case, the first 2D region is defined automatically, a validation from the user can be requested.

As illustrated on figure 4b, the first 3D region ROI1-3D of interest is then projected according to the second point of view for obtaining a third 2D image (step 400). Therefore, the structure defined by means of the first 2D image can be viewed with more accuracy. Figure 4b illustrates the projection of the first 2D region of interest defined on figure 4a which is now delimited by the corresponding lines L1' and L2' on both sides of a central line L_{C}'. To do that, the definition of the first 2D region of interest comprises a step 3010 of defining a central line L_{C} and a first line L₁ at a first distance D₁ of the central line L_{C} and defining a second line L₂ at a second distance D₂ of the central line L_{C}, the 2D region being delimited by the first line L₁ and the second line on both sides of the central line L_{C}. The central, first and second lines can be defined manually by the user examining the anatomical region of the patient, or automatically. In that last case, a validation from the user can be requested.

According to an embodiment, the central line L_{C} is defined by a point P_{C} and a direction D_{C}, the central line L_{C} being computed from the point and the direction, wherein the point P_{C} and the direction D_{C} are determined manually or automatically. Again, when the determination is automatic, a validation from the user can be requested.

For instance, the point Pc is chosen by the user on the second 2D image PF, and the direction Dc is computed to be orthogonal to the first point of view corresponding to the second 2D image or computed by an algorithm based on the 3D image.

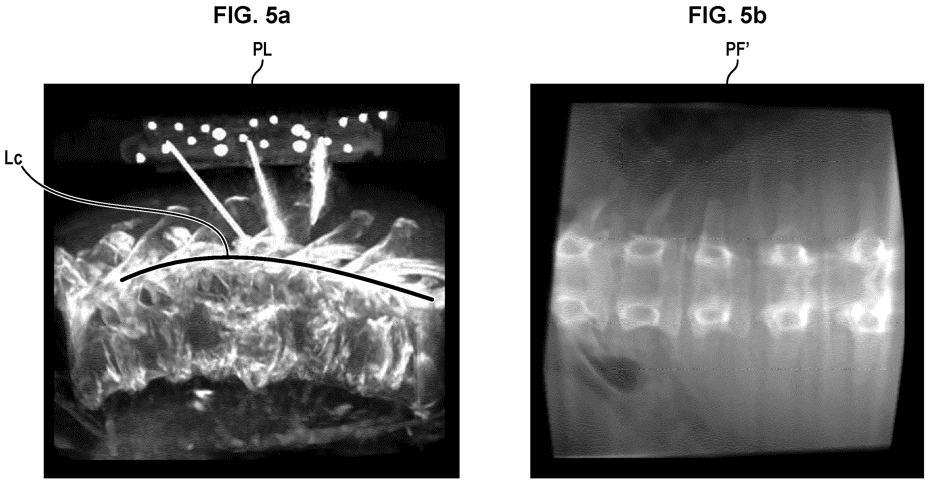

Figure 5a illustrates the first 2D image wherein a first 2D region of interest is defined and figure 5b illustrates the third 2D image where irrelevant information of the second 2D image has been removed. In particular, on figure 5a vertebras are shown and the user for visualizing the pedicles define the central line Lc corresponding to the center of the first 2D region of interest. This first 2D region of interest is thus projected according to the second point of view for obtaining a view of the pedicles as shown of figure 5b.

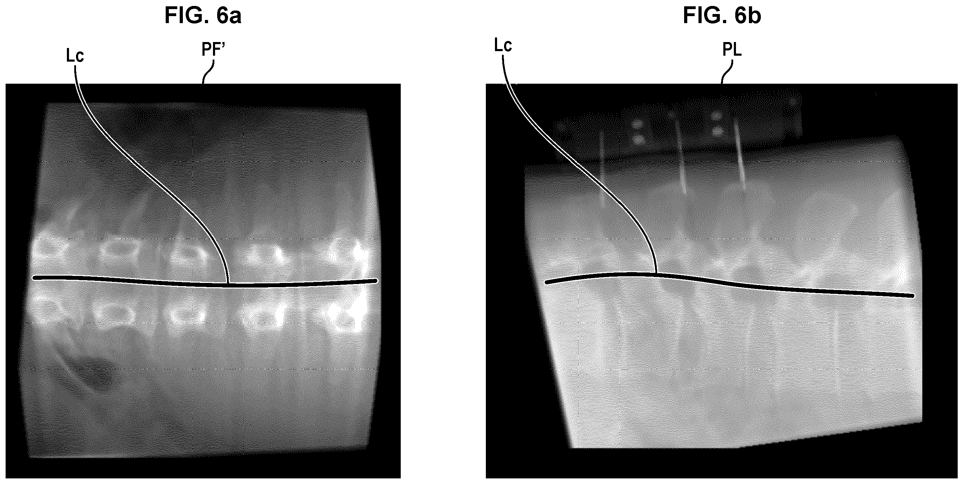

Figure 6a corresponds to the third 2D image illustrated on figure 5b now used for defining a second 2D region of interest to be projected according to a point of view transverse to the point of view according to which figure 6a is projected. In particular, in that case the user needs to enhance the visualization of the right pedicles. To do so, the user draws a circle and the second region of interest is defined from the center of this circle by defining a central line Lc having a direction identical to the one of figure 5b, such central line Lc crossing the center of the drawn circle. For instance, the center of the circle drawn by the user can be determined automatically and, optionally, validated by the user. Therefore, by projecting this second 2D region of interest a fourth image is obtained as illustrated on figure 6b. In this figure 6b the visualization of the right pedicles is enhanced, as these right pedicles have been isolated from the left ones thanks to the projection of the second 2D region of interest drawn on the third 2D image.

Thus, the definition of the region of interest in the first projection permits to define a region that the practitioner wants to display accurately.

By means of the third 2D image it is thus possible to define another region of interest (step 500) by defining a third 2D region of interest ROI3 (step 501) and then a third 3D region of interest (step 502) to be projected according to the first point of view for obtaining a fourth 2D image (step 600). These steps can be implemented iteratively for allowing the practitioner to define the relevant region of interest during the intervention. The determination of the third 2D region of interest comprises identical steps as those implemented for determining first and second 2D regions of interests (see steps 3010 corresponding to step 5010, step 302 corresponds to step 502).

In addition, the regions of interest (2D or 3D) obtained during the method can be filtered (step 700) to enhance the contrast of the corresponding image. By the filtering it is possible to remove irrelevant structures which voxels' intensities are out of the intensity range of the region of interest. Such irrelevant structures hiding crucial structures.

According to an embodiment, the filtering permits to keep the pixels or voxels having levels defined with respect to a predetermined threshold. In particular, it is possible to select a subset of voxels or pixels especially those having levels higher than the maximum value of a percentage of the pixels or voxels of lower level.

Alternatively, it is possible to select a subset of voxels or pixels especially those having levels lower than the maximum value of a percentage of the pixels or voxels of higher level.

The levels for the filtering are determined in the first or second 3D region of interest. The use of the 3D region of interest for defining the levels permits to obtain an efficient filtering. For example, using the pixels of the image 3D initially determined is less efficient for taking into account the percentage of the bones.

For instance, the percentage can be between 2% and 20%, preferably 10%.

During each step, the 2D images can be displayed preferably in a specific window, on a display such as e.g., computer screens, augmented reality display (using glasses, semi-transparent screen, projectors, etc.), or other display that can be used by a practitioner in order to examine a medical image, or plan or conduct an intervention on a patient.

## Claims

1. A computer implemented method for enhancing the display of features of interest in a 3D image of an anatomical region of a patient, the method comprising:
a) obtaining (100) a 3D image (I-3D) of an anatomical region of a patient;
b) projecting (201) the 3D image according to a first point of view for obtaining a first 2D image (PL);
b1) projecting (202) the 3D image according to a second point of view for obtaining a second 2D image (PF) of said anatomical region;
the first point of view being transverse to the second point of view and the first 2D image (PL) being transverse to the second 2D image (PF); the method comprising c) determining (300) from the first 2D image (PL) a first 3D region of interest (ROI1-3D),
wherein the step of determining (300, 500) the first 3D region of interest (ROI1-3D, ROI2-3D) comprises the sub-steps of :
- defining (301, 501) a 2D region on the first 2D image,
- obtaining (302, 502) from said 2D region and the 3D image, the first 3D region of interest, the 2D region being the projection of the first 3D region of interest according to the transverse point of view to the first 2D image ;
d) projecting (400) said 3D region of interest according to the second point of view for obtaining a third 2D image (PF').

2. Method according to claim 1, comprising a step of determining (500) from the third 2D image (PF') a second 3D region of interest (ROI2-3D); and a step of projecting (600) said second 3D region of interest (ROI2-3D) according to the first point of view for obtaining a fourth 2D image (PL').

3. Method according to any one of claims 1 to 2, wherein the step of defining (301, 501) the 2D region comprises a step (3010, 5010) of defining a central line (L_{C}) and a first line (L₁) at a first distance (D₁) of the central line (L_{C}) and a step of defining a second line (L₂) at a second distance (D₂) of the central line (L_{C}), said 2D region being delimited by the first line (L₁) and the second line on both sides of the central line (L_{C})

4. Method according to claim 3, wherein the first distance (D₁) is different or equal to the second distance (D₂).

5. Method according to any one of claims 3 to 4, wherein the central line (L_{C}) is defined by a point (P_{C}) and a direction (D_{C}), the central line (L_{C}) being computed from the point and the direction, wherein the point (P_{C}) and the direction (D_{C}) are determined manually or automatically.

6. Method according to any one of claims 1 to 2, wherein the step of defining the 2D region comprises a step of defining (3010, 5010) a circle on the first or second 2D image, a central line (L_{C}) being defined relative to the center of the circle as defined.

7. Method of any of claims 1 to 6, wherein the step of defining a 2D region on the first 2D image is implemented automatically or manually.

8. Method according to any one of claims 1 to 7, comprising a step (700) of filtering the first and/or second 3D region of interest so as to keep the pixels or voxels having levels defined with respect to a predetermined threshold, in the first or second 3D region of interest.

9. Method according to any one of claims 1 to 8, comprising a step (700) of filtering the first and/or second 3D region of interest so as to keep the pixels or voxels having levels higher than the maximum value of a percentage of the pixels or voxels of lower level in the first or second 3D region of interest.

10. Method according to any one of claims 1 to 8, comprising a step of filtering (700) the first and/or second region of interest so as to keep the pixels or voxels having levels lower than the maximum value of a percentage of the pixels or voxels of higher level in the first or second 3D region of interest.

11. Method according to any one of claims 1 to 9, wherein the 3D image is selected among a plurality of 3D images, the selection being implemented automatically or manually.

12. Method as claimed in any of claims 1 to 11, comprising a step of displaying the 2D images.

13. Method according to any one of claims 1 to 12, wherein the first point of view is orthogonal to the second point of view.

14. Medical imaging system comprising a processor configured for implementing the computer implemented method as claimed in any of claim 1 to 13.

## Patentansprüche

1. Computerumgesetztes Verfahren zum Verbessern der Anzeige von interessierenden Merkmalen in einem 3D-Bild eines anatomischen Bereichs eines Patienten, wobei das Verfahren umfasst:
a) Erzielen (100) eines 3D-Bildes (I-3D) eines anatomischen Bereichs eines Patienten;
b) Projizieren (201) des 3D-Bildes gemäß einem ersten Blickpunkt zum Erzielen eines ersten 2D-Bildes (PL);
b1) Projizieren (202) des 3D-Bildes gemäß einem zweiten Blickpunkt zum Erzielen eines zweiten 2D-Bildes (PF) des anatomischen Bereichs;
wobei der erste Blickpunkt zu dem zweiten Blickpunkt quergerichtet ist, und das erste 2D-Bild (PL) zu dem zweiten 2D-Bild (PF) quergerichtet ist; wobei das Verfahren umfasst
c) Bestimmen (300) aus dem ersten 2D-Bild (PL) eines ersten interessierenden 3D-Bereichs (ROI1-3D),
wobei der Schritt des Bestimmens (300, 500) des ersten interessierenden 3D-Bereichs (ROI1-3D, ROI2-3D) die folgenden Teilschritte umfasst:
- Definieren (301, 501) eines 2D-Bereichs in dem ersten 2D-Bild;
- Erzielen (302, 502), aus dem 2D-Bereich und dem 3D-Bild, des ersten interessierenden 3D-Bereichs, wobei der 2D-Bereich die Projektion des ersten interessierenden Bereichs gemäß dem quergerichteten Blickpunkt des ersten 2D-Bildes ist;
d) Projizieren (400) des interessierenden 3D-Bereichs gemäß dem zweiten Blickpunkt zum Erzielen eines dritten 2D-Bildes (PF').

2. Verfahren nach Anspruch 1, umfassend einen Schritt des Bestimmens (500) aus dem dritten 2D-Bild (PF') eines zweiten interessierenden 3D-Bereichs (ROI2-3D); und einen Schritt des Projizierens (600) des zweiten interessierenden 3D-Bereichs (ROI2-3D) gemäß dem ersten Blickpunkt zum Erzielen eines vierten 2D-Bildes (PL').

3. Verfahren nach einem der Ansprüche 1 bis 2, wobei der Schritt des Definierens (301, 501) des 2D-Bereichs einen Schritt (3010, 5010) des Definierens einer Mittellinie (L_{C}) und einer ersten Linie (L₁) in einem ersten Abstand (D₁) von der Mittellinie (L_{C}) und einen Schritt des Definierens einer zweiten Linie (L₂) in einem zweiten Abstand (D₂) von der Mittellinie (L_{C}) umfasst, wobei der 2D-Bereich durch die erste Linie (L₁) und die zweite Linie auf beiden Seiten der Mittellinie (L_{C}) begrenzt ist.

4. Verfahren nach Anspruch 3, wobei der erste Abstand (D₁) gleich oder anders als der zweite Abstand (D₂) ist.

5. Verfahren nach einem der Ansprüche 3 bis 4, wobei die Mittellinie (L_{C}) durch einen Punkt (P_{C}) und eine Richtung (D_{C}) definiert ist, wobei die Mittellinie (L_{C}) aus dem Punkt und der Richtung berechnet wird, wobei der Punkt (P_{C}) und die Richtung (D_{C}) manuell oder automatisch bestimmt werden.

6. Verfahren nach einem der Ansprüche 1 bis 2, wobei der Schritt des Definierens des 2D-Bereichs einen Schritt des Definierens (3010, 5010) eines Kreises in dem ersten oder dem zweiten 2D-Bild umfasst, wobei eine Mittellinie (L_{C}) im Verhältnis zu der definierten Mitte des Kreises definiert wird.

7. Verfahren nach einem der Ansprüche 1 bis 6, wobei der Schritt des Definierens eines 2D-Bereichs in dem ersten 2D-Bild automatisch oder manuell umgesetzt wird.

8. Verfahren nach einem der Ansprüche 1 bis 7, umfassend einen Schritt (700) des Filterns des ersten und/oder zweiten interessierenden 3D-Bereichs, um die Pixel oder Voxel, die Stufen aufweisen, die im Verhältnis zu einer vorbestimmten Schwelle definiert sind, in dem ersten oder zweiten interessierenden 3D-Bereich zu halten.

9. Verfahren nach einem der Ansprüche 1 bis 8, umfassend einen Schritt (700) des Filterns des ersten und/oder zweiten interessierenden 3D-Bereichs, um die Pixel oder Voxel, die Stufen aufweisen, die höher als der Höchstwert eines Prozentsatzes der Pixel oder Voxel einer niedrigeren Stufe sind, in dem ersten oder zweiten interessierenden 3D-Bereich zu halten.

10. Verfahren nach einem der Ansprüche 1 bis 8, umfassend einen Schritt des Filterns (700) des ersten und/oder zweiten interessierenden Bereichs, um die Pixel oder Voxel, die Stufen aufweisen, die niedriger als der Höchstwert eines Prozentsatzes der Pixel oder Voxel einer höheren Stufe sind, in dem ersten oder zweiten interessierenden 3D-Bereich zu halten.

11. Verfahren nach einem der Ansprüche 1 bis 9, wobei das 3D-Bild aus einer Vielzahl von 3D-Bildern ausgewählt wird, wobei die Auswahl automatisch oder manuell umgesetzt wird.

12. Verfahren nach einem der Ansprüche 1 bis 11, umfassend einen Schritt des Anzeigens der 2D-Bilder.

13. Verfahren nach einem der Ansprüche 1 bis 12, wobei der erste Blickpunkt zu dem zweiten Blickpunkt orthogonal ist.

14. Medizinisches Bildgebungssystem, umfassend einen Prozessor, der dazu konfiguriert ist, das computerumgesetzte Verfahren nach einem der Ansprüche 1 bis 13 umzusetzen.

## Revendications

1. Procédé mis en œuvre par ordinateur pour améliorer l'affichage de caractéristiques d'intérêt dans une image 3D d'une région anatomique d'un patient, le procédé comprenant :
a) acquisition (100) d'une image 3D (I-3D) d'une région anatomique d'un patient ;
b) projection (201) de l'image 3D selon un premier point de vue afin d'obtenir une première image 2D (PL) ;
b1) projection (202) de l'image 3D selon un deuxième point de vue afin d'obtenir une deuxième image 2D (PF) de ladite région anatomique ;
le premier point de vue étant transversal au second point de vue et la première image 2D (PL) étant transversale à la seconde image 2D (PF) ; le procédé comprenant
c) détermination (300), à partir de la première image 2D (PL), d'une première région d'intérêt 3D (ROI1-3D),
dans lequel l'étape de détermination (300, 500) de la première région d'intérêt en 3D (ROI1-3D, ROI2-3D) comprend les sous-étapes suivantes :
- définition (301, 501) d'une région 2D sur la première image 2D,
- obtention (302, 502), à partir de ladite région 2D et de l'image 3D, de la première région d'intérêt 3D, la région 2D étant la projection de la première région d'intérêt 3D selon le point de vue transversal sur la première image 2D ;
d) projection (400) de ladite région d'intérêt en 3D selon le deuxième point de vue afin d'obtenir une troisième image en 2D (PF').

2. Procédé selon la revendication 1, comprenant une étape consistant à déterminer (500), à partir de la troisième image 2D (PF'), une deuxième région d'intérêt 3D (ROI2-3D) ; et une étape consistant à projeter (600) ladite deuxième région d'intérêt 3D (ROI2-3D) selon le premier point de vue afin d'obtenir une quatrième image 2D (PL').

3. Procédé selon l'une quelconque des revendications 1 à 2, dans lequel l'étape consistant à définir (301, 501) la région 2D comprend une étape (3010, 5010) consistant à définir une ligne centrale (L_{C}) et une première ligne (L₁) à une première distance (D₁) de la ligne centrale (L_{C}) et une étape de définition d'une deuxième ligne (L₂) à une deuxième distance (D₂) de la ligne centrale (L_{C}), ladite région 2D étant délimitée par la première ligne (L₁) et la deuxième ligne de part et d'autre de la ligne centrale (L_{C}).

4. Procédé selon la revendication 3, dans lequel la première distance (D₁) est différente ou égale à la deuxième distance (D₂).

5. Procédé selon l'une quelconque des revendications 3 à 4, dans lequel la ligne centrale (L_{C}) est définie par un point (P_{C}) et une direction (D_{C}), la ligne centrale (L_{C}) étant calculée à partir du point et de la direction, le point (P_{C}) et la direction (D_{C}) étant déterminés manuellement ou automatiquement.

6. Procédé selon l'une quelconque des revendications 1 à 2, dans lequel l'étape de définition de la région 2D comprend une étape de définition (3010, 5010) d'un cercle sur la première ou la deuxième image 2D, une ligne centrale (L_{C}) étant définie par rapport au centre du cercle ainsi défini.

7. Procédé selon l'une quelconque des revendications 1 à 6, dans lequel l'étape consistant à définir une région 2D sur la première image 2D est mise en œuvre automatiquement ou manuellement.

8. Procédé selon l'une quelconque des revendications 1 à 7, comprenant une étape (700) consistant à filtrer la première et/ou la deuxième région d'intérêt 3D de manière à conserver, dans la première ou la deuxième région d'intérêt 3D, les pixels ou voxels présentant des niveaux définis par rapport à un seuil prédéterminé.

9. Procédé selon l'une quelconque des revendications 1 à 8, comprenant une étape (700) consistant à filtrer la première et/ou la deuxième région d'intérêt 3D de manière à conserver les pixels ou voxels présentant des niveaux supérieurs à la valeur maximale d'un pourcentage des pixels ou voxels de niveau inférieur dans la première ou la deuxième région d'intérêt 3D.

10. Procédé selon l'une quelconque des revendications 1 à 8, comprenant une étape de filtrage (700) de la première et/ou de la deuxième région d'intérêt de manière à conserver les pixels ou voxels présentant des niveaux inférieurs à la valeur maximale d'un pourcentage des pixels ou voxels de niveau supérieur dans la première ou la deuxième région d'intérêt 3D.

11. Procédé selon l'une quelconque des revendications 1 à 9, dans lequel l'image 3D est sélectionnée parmi une pluralité d'images 3D, la sélection étant effectuée automatiquement ou manuellement.

12. Procédé selon l'une quelconque des revendications 1 à 11, comprenant une étape consistant à afficher les images 2D.

13. Procédé selon l'une quelconque des revendications 1 à 12, dans lequel le premier point de vue est orthogonal au deuxième point de vue.

14. Système d'imagerie médicale comprenant un processeur configuré pour mettre en œuvre le procédé mis en œuvre par ordinateur selon l'une quelconque des revendications 1 à 13.
